# EUROPÄISCHE PATENTSCHRIFT

(11) **EP 4 100 676 B1**
(45) Veröffentlichungstag und Bekanntmachung des Hinweises auf die Patenterteilung: **23.10.2024**
(21) Anmeldenummer: 21707899.7
(22) Anmeldetag: 05.02.2021
(51) Int. Cl.: F16L 55/26, F16L 55/28, G01M 3/24

(54) **INSPEKTIONSVORRICHTUNG UND INSPEKTIONSEINHEIT**
INSPECTION DEVICE AND INSPECTION UNIT
DISPOSITIF D'INSPECTION ET UNITÉ D'INSPECTION

(30) Priorität: 05.02.2020 DE 102020102951
(43) Veröffentlichungstag der Anmeldung: 14.12.2022
(73) Patentinhaber: Rosen IP AG, 6370 Stans (CH)
(72) Erfinder: DANILOV, Andrey, 49809 Lingen (DE); BOSSE, Ben, 49808 Lingen (DE); ROSEN, Patrick, 49716 Meppen (DE)
(74) Vertreter: Wischmeyer, André
(86) Internationale Anmeldenummer: PCT/EP2021/052790
(87) Internationale Veröffentlichungsnummer: WO 2021/156433

(56) Entgegenhaltungen:
- EP-A2- 1 215 436
- CN-A- 105 043 312
- US-A1- 2008 204 008
- US-B1- 6 820 653

## Beschreibung

Die vorliegende Erfindung betrifft eine Inspektionsvorrichtung zur Untersuchung von Rohrleitungen, umfassend einen im Betriebsfall durch die Rohrleitung rollbaren Sensorträger, der in einem quer zu einer Drehachse verlaufenden Schnitt mit einem zumindest im Wesentlichen kreisartigen Umfang versehen ist und der zumindest eine Sensoreinheit aufweist.

In Rohrleitungen, insbesondere in Form von magnetisierbaren Stahlrohren, werden weltweit Medien wie Öl, Gas, Wasser oder Gemische hiervon transportiert. Im Laufe der Lebensdauer einer solchen Rohrleitung können in deren Wand verschiedene Defekte auftreten. Hierzu zählen Verschleiß- und Ermüdungserscheinungen, die zu langfristigen Betriebsstörungen führen können. Mit zunehmendem Alter einer Rohrleitung treten diese Defekte naturgemäß zunehmend auf, weswegen Rohrleitungen verstärkt überwacht werden müssen.

Die gebräuchlichste Methode der Inspektion von Rohrleitungen ist die Inspektion mit sogenannten intelligenten Molchen, was allerdings beispielsweise in Abhängigkeit von der Geometrie und dem Verlauf der Rohrleitung nicht immer möglich ist. Daher werden als Ersatz für intelligente Molche Vorrichtungen in Form einer Kugel verwendet. Eine solche, kompakte Konstruktion weist eine höhere Rohrleitungsgängigkeit und entsprechend sehr gute Passageeigenschaften auf.

Solche kugelförmigen Inspektionsvorrichtungen bewegen sich in der Rohrleitung aufgrund der Dynamik des transportierten Mediums und des Rohrleitungsverlaufs unregelmäßig, sie können um alle drei Raumachsen springen, drehen oder gleiten. Aus diesen unregelmäßigen Bewegungen ergibt sich ein sehr hoher Aufwand bei der Dateninterpretation bis hin zu deren Unmöglichkeit aufgrund zu niedriger Signalzu-Rausch-Verhältnissen. Dies gilt sowohl für die Interpretation der Defektdaten als auch der Position der Defekte. Ein solcher Stand der Technik ist beispielsweise in der EP 2902690 B1 resp. der US 2008204008 A1 beschrieben.

In der CN 105043312 ist eine Inspektionsvorrichtung offenbart, die eine Vielzahl von über die Außenoberfläche der ballförmigen Inspektionsvorrichtung verteilte Ultraschallsensoren aufweist.

In der US 6,820,653 B1 ist eine kabelgebundene Inspektions- und Reparaturvorrichtung offenbart, die während ihres Betriebs in der Rohrleitung über ein Bediener-Interface kontrolliert wird.

Die EP 1 215 436 A2 offenbart einen mit Übermaß bezüglich einer zu molchenden Rohrleitung ausgebildeten Rohrleitungsmolch mit einem ringförmigen Magnethalter.

Es ist Aufgabe der vorliegenden Erfindung, eine Inspektionsvorrichtung mit einem stabileren Laufverhalten zu schaffen.

Die Aufgabe wird gelöst durch einen Gegenstand gemäß Anspruch 1 sowie durch einen Gegenstand gemäß Anspruch 16. Vorteilhafte Ausgestaltungen sind den Unteransprüchen sowie der nachfolgenden Beschreibung zu entnehmen.

Erfindungsgemäß ist vorgesehen, dass der Sensorträger mehrere entlang des Umfangs angeordnete Stabilisierungsmittel umfasst, wobei als Stabilisierungsmittel mehrere von der Drehachse radial beabstandete Magnete vorgesehen sind, wobei ein jeweiliges Magnetfeld der Magnete im Betriebsfall für einen stabileren Lauf mit der Rohrleitungswand wechselwirkt. Das oder die Stabilisierungsmittel begünstigen oder verbessern im Betriebsfall eine Bewegung der Inspektionsvorrichtung in eine Richtung zumindest im Wesentlichen quer zu einer gewählten Drehachse und ein Abrollen auf dem Umfang. Das Abrollen erfolgt im Betriebsinsbesondere insbesondere entlang der Rohrleitungsachse, wobei die Drehachse vorzugsweise dann zumindest im Wesentlichen quer dazu steht, wenn sie mit der Rohrleitungsachse einen Winkel von +/- 10° einnimmt.

Eine Verbesserung des Abrollverhaltens liegt insbesondere dann vor, wenn das Abrollen der Inspektionsvorrichtung um einen Umfang in der Rohrleitung um die gewählte Drehachse besser, d.h. gleichmäßiger oder überhaupt als um einen anderen Umfang mit einer dann quer oder angewinkelt zu der gewählten Drehachse liegenden weiteren Drehachse erfolgen kann. Das Abrollen der Vorrichtung erfolgt insbesondere auf dem oder den den Umfang ausbildenden Teilen der Inspektionsvorrichtung.

Das oder die Stabilisierungsmittel sind insbesondere entfernt von der Drehachse, d.h., im oder am äußeren Umfang angeordnet, bilden diesen gegebenenfalls mit aus und sorgen durch die von ihnen ausgehende Kraft oder einen hierdurch entstehenden Impuls für einen stabileres Abrollen der Inspektionsvorrichtung.

Unabhängig davon, ob es sich bei dem Sensorträger um einen im Wesentlichen kreisartigen oder ellipsoidartigen Sensorträger handelt wird, wird durch das oder die Stabilisierungsmittel, die entlang des Umfangs angeordnet sind, eine Bewegung dann begünstigt, wenn beispielsweise die Einhaltung einer Ausrichtung einer Drehachse der Vorrichtung stabilisiert wird, beispielsweise durch Erhöhung eines erzeugten Drehimpulses oder durch Mittel zum Anhaften an der Rohrleitungswand. Durch letztere Mittel wird eine schwerkraftbedingte Bewegung der Inspektionsvorrichtung in der Rohrleitung entlang der 0-Uhr- oder der 6-Uhr-Position unterstützt.

Ein kreisartiger Umfang ist dann gegeben, wenn auf einer planen Ebene ein Abrollen der Inspektionsvorrichtung auf dem kreisartigen Umfang ohne eine Messung störende Beschleunigungsspitzen möglich ist. Es handelt sich bei einem kreisartigen Umfang somit um einen genau kreisförmigen oder z.B. durch einen Polygonzug angenähert kreisförmigen Umfang. Analoges gilt für eine kugelartige und weiter unten aufgeführte Form. Eine ellipsoidartige Form ist eine entweder durch genau ein Ellipsoid oder eine um wenige, d.h. kleiner 10 cm, vorzugsweise kleiner 5 cm von einem Ellipsoid abweichende Form.

Die Stabilisierungsmittel können den Umfang mit ausbilden oder dicht an dem Umfang angeordnet sein, so kann beispielsweise der quer zur Drehachse verlaufende Schnitt durch die insbesondere radial von der Drehachse beabstandeten Stabilisierungsmittel verlaufen oder an diesen entlang verlaufen.

Vorzugsweise sind als Stabilisierungsmittel ein oder mehrere von der Drehachse radial beabstandete Gewichte und mehrere von der Drehachse radial beabstandete Magnete vorgesehen, wobei ein jeweiliges Magnetfeld des oder der Magnete im Betriebsfall mit der Rohrleitungswand wechselwirkt. Insbesondere weisen die Magnete ein höheres Gewicht als radial zur Drehachse versetzte Bereiche der Inspektionsvorrichtung auf. Während ein Gewicht bereits den erzeugten Drehimpuls erhöht und somit die Einhaltung der Drehachsenrichtung begünstigt, wird durch einen oder mehrere Magnete in dem Umfang oder entlang des Umfangs der Inspektionsvorrichtung neben einer etwaigen Drehimpulserhöhung zumindest die Haftung zwischen Wand und Vorrichtung erhöht und somit ein schlupffreier Lauf stark begünstigt. Beim Rollen der Inspektionsvorrichtung wird das magnetisierbare Material der Rohrleitung magnetisiert und beim Entfernen des Magneten während des Rollens wieder entmagnetisiert, wodurch Wirbelströme entstehen, die einer Erhöhung der Laufgeschwindigkeit der Vorrichtung entgegenwirken und somit das Laufverhalten stark verbessern. Die Magnete, die selbst auch zusätzliche Gewichte entlang des Umfangs darstellen können, begünstigen somit einerseits schwerkraftbedingt andererseits durch die magnetische Wechselwirkung deutlich einen stabileren Lauf der Vorrichtung.

Vorzugsweise werden Permanentmagnete als Magnete verwendet. Es kann sich allerdings auch um Elektromagnete handeln, so dass die Stärke der Wechselwirkung mit der Wand der Rohrleitung durch eine entsprechende Steuervorrichtung einstellbar ist.

In einer Ausbildung als Permanentmagnete verläuft die Nord-Süd-Ausrichtung der Permanentmagnete vorzugsweise parallel zur Drehachse, so dass am Umfang keine in tangentialer Richtung des Umfangs anstehenden Kräfte auftreten. Alternativ oder ergänzend können ein oder mehrere oder auch alle der als Permanentmagnete ausgebildeten Magnete radial zur Drehachse mit ihrer Nord-Süd-Ausrichtung ausgerichtet sein, um entsprechend ebenfalls keine tangentialen Kräfte entstehen zu lassen.

Diese rotationssymmetrische Einordnung der Magnete im stehenden Zustand erzeugt keine tangentialen Kräfte, sie ermöglicht ein leichteres Rollen und es bauen sich nur beim Rollen der Vorrichtung durch die im Rohr induzierten Wirbelströme Magnetkräfte auf, die der Bewegung entgegenwirken und die den Vortrieb der Vorrichtung bremsen. Über eine entsprechende Steuervorrichtung kann daher insbesondere bei der Verwendung von Elektromagneten eine Bremskraft beispielsweise in Abhängigkeit der zu erreichenden oder vorgegebenen Geschwindigkeit oder auf Basis eines Geschwindigkeitsbereichs eingestellt werden.

Insbesondere sind die Magnete entlang des Umfang dicht aneinander bzw. nebeneinander angeordnet, wobei eine dichte Anordnung als ein mit oder ohne eine etwaige Einfassung versehener Abstand der Magnete insbesondere ≤ 5 cm vorzugsweise ≤ 3 cm verstanden wird. Insbesondere liegen die Magnete mit oder ohne Einfassung direkt aneinander.

Gemäß einer weiteren vorteilhaften Ausgestaltung der Erfindung sind der oder die Magnete zumindest auf einer Seite von einer ein magnetisierbares Material aufweisenden und vorzugsweise aus diesem bestehenden Einfassung begrenzt. In Richtung der Drehachse betrachtet ist diese Einfassung vorzugsweise kreisringförmig sowie magnetisierbar ausgebildet. Insbesondere kann diese Einfassung den Umfang mit ausbilden. Hierdurch kann eine Bündelung der Magnetfeldlinien in Richtung der Wand erfolgen, so dass der Magnetfluss besser in die Rohrleitungswand geleitet wird. Insbesondere können zwei Metallscheiben in Kreisringform an den Seiten der im Umfang der Vorrichtung eingebauten Magnete verwendet werden.

Vorzugsweise ist der Sensorträger zumindest hinsichtlich einer Umhüllenden Kugel- oder elliposidartig ausgebildet. Bei einer ellipsoidartigen bzw. ellipsoiden Umhüllenden sind vorzugsweise die Längen zweier insbesondere gleich langer Halbachsen größer sind als die Länge der in der Drehachse liegenden dritte Halbachse. Die dritte Halbachse sollte vorzugsweise zwischen der Hälfte und 100 % der Länge einer der beiden weiteren Halbachsen lang sein. Hierdurch wird wirkungsvoll ein Umkippen vermieden, so dass durch diese Form eine verbesserte Passagefähigkeit erreicht wird. In Kombination mit den Stabilisierungsmitteln kann die Vorrichtung hinsichtlich ihrer Umhüllenden an die Krümmung der Rohrleitung angepasst werden. So wird die Ausrichtung entlang der Rohrachse durch die Strömung des Mediums erleichtert und gleichzeitig Platz für etwaige Antriebselemente geschaffen.

Es handelt sich bei einer ellipsoidartigen Form vorliegend somit um eine rotationssymmetrische Form, die stabil durch eine Rohrleitung rollen kann und bei der die Länge der dritten Halbachse nicht so kurz gewählt ist, dass die Vorrichtung schnell auf die Seite kippt.

Bereits durch die insbesondere als Magnete ausgebildeten Stabilisierungsmittel alleine und insbesondere in Kombination mit der Form der Inspektionsvorrichtung ist diese selbststabilisierend und richtet sich so bei der Fortbewegung in der Pipeline wieder auf, falls die Inspektionsvorrichtung auf die Seite gekippt ist.

Gemäß einer zu einer ohne Abstützung durch die Rohrleitung abrollbaren Variante der Erfindung alternativen Ausbildung, kann der ansonsten mit einer ebenfalls kugel- oder zumindest im Wesentlichen ellipsoiden Umhüllenden versehene Sensorsträger drehbar in einem zur Abstützung der Inspektionsvorrichtung an der Rohrleitungswand vorgesehenen Abstützelement gehalten und insbesondere gelagert sein, insbesondere welches einenends den Sensorträger umfasst und anderenends zur Abstützung an der Rohrleitungswand, vorzugsweise mit einem im Vergleich zum Sensorträgerumfang umfangsmäßig kleineren Rollrad, ausgebildet ist. Die Drehachse eines solchen Rollrads und die des Sensorträgers sind vorzugsweise parallel ausgebildet. Es ergibt sich eine besonders stabile Fahrt durch die Rohrleitung an deren 6-Uhr-Position, wobei das insbesondere aus Polyurethan ausgebildete Rollrad vorzugsweise das in Fahrtrichtung vordere Rad ist.

In einem die beiden Enden des Abstützelement verbindenden länglichen Träger kann zusätzlich ein Sensor, ein Energiespeicher und/oder Elektronik angeordnet sein.

Vorzugsweise wird der Umfang durch zumindest ein zumindest teilweise aus Kunststoff hergestelltes, vorzugsweise ring- oder zumindest ringsegmentförmiges und/oder elastisches Dämpfungselement zumindest mit ausgebildet. Das Dämpfungselement kann Ausnehmungen für Sensoreinheiten aufweisen. Aufgrund einer entsprechenden Materialwahl mit einem einen für die Rohrleitung ausreichend hohen Reibungskoeffizienten aufweisenden Kunststoff wird die Haftung an der Rohrleitungswand erhöht und ein rutschfreier Lauf begünstigt. Darüber hinaus kann das Dämpfungselement bei auf der Innenseite der Oberfläche vorhandenen Verunreinigungen oder Erhebungen in Form von Schweißnähten od.dgl. für einen erschütterungsfreieren Lauf sorgen.

In einer Ausbildung mit Rollrad kann das ringsegmentförmige Dämpfungselement als Teil des Abstützelements ein Lager des Sensorträgers ausbilden. Dann dreht sich der Sensorträger in dem Dämpfungselement, das dann allerdings nur in geringem Maße dämpft sondern eher als Lager dient. Alternativ kann auf die dämpfenden Eigenschaften des ringsegmentförmige Dämpfungselements im Wesentlichen verzichtet werden, wodurch das Abstützelement mit dem ringsegmentförmigen Teil dann lediglich eine Halterung bzw. ein Lager des Sensorträgers ausbildet.

Alternativ oder ergänzend weist die Inspektionsvorrichtung ein oder mehrere Abrollelemente auf, die definierte Anlagebereiche der Inspektionsvorrichtung zur Anlage an der Rohrleitungswand, vorzugsweise links und rechts von den Magneten, ausbilden, so dass die Vorrichtung weiter stabilisiert und ein Abrollen definierter möglich ist. Insbesondere handelt es sich bei den Abrollelementen um die radial zur Drehachse äußeren Teile der Einfassungen der Magnete.

Die Höhe des oder der Dämpfungselemente über angrenzende Teile der Inspektionsvorrichtung, z.B. Abrollelemente, kann vorzugsweise in etwa der Höhe einer Standardschweißnaht der Rohrleitung über deren sonstiger inneren Oberfläche entsprechen und zwischen 0,1 cm und 3 cm betragen.

Insbesondere in einer Ausbildung der Inspektionsvorrichtung, in der eine Tragstruktur des Sensorträgers aus demselben oder einem weiteren Kunststoff zumindest mitausgebildet ist, weist der gesamte Sensorträger dämpfende Eigenschaften auf, die einer Datenaufnahme durch etwaige Sensoren von Sensoreinheiten zugutekommen. Etwaige Erschütterungen, die von diesen in die Vorrichtung eingebrachte Energie können besser dissipieren.

Diese elastischen Elemente können sich in den Kontaktbereichen der Inspektionsvorrichtung mit der Wand der Rohrleitung verformen, wobei die durch die Verformung erzeugte Kraft gegen die Magnetkräfte wirkt und so die Trennung der Vorrichtung von der Wand erleichtert sowie die Passageeigenschaften der Vorrichtung beim Überfahren verschiedener Hindernisse wie Schweißnähte oder Wandstärkenänderungen verbessert. Zur Analyse der Rohrleitungen ist es von Vorteil, wenn die Inspektionsvorrichtung wenigstens einen Sensor aus einer Gruppe umfassend Gyroskope, Beschleunigungssensoren, Magnetfeldsensoren, Schallsensoren, E-MAT-Sensoren, Drucksensoren und Temperatursensoren aufweist.

Die Drehung der Vorrichtung kann zur Durchführung von odometrischen Messungen verwendet werden. Die zurückgelegte Distanz kann durch Drehwinkel und Vorrichtungsdurchmesser bestimmt werden. Der Drehwinkel kann beispielsweise durch Messen der Schwerkraftrichtung mit einem Gyroskop und/oder einem Beschleunigungssensor und/oder durch Erfassen des Kontakts von zumindest einem Punkt der Vorrichtung mit der Wand gemessen werden. Außerdem kann die mit dem Gyroskop oder dem Beschleunigungssensor messbare Zentrifugalbeschleunigung auch dazu verwendet werden, die Geschwindigkeit der Vorrichtung zu berechnen und dann auch den Weg der Vorrichtung abzuschätzen.

Etwaige mit dem Beschleunigungssensor messbare Beschleunigungsspitzen können zur Detektion von Schweißnähten verwendet werden. Da die Position der Schweißnähte oft bekannt ist, können diese Signale zur Korrektur oder Bestimmung der Position der Vorrichtung verwendet werden.

Um einen Kontakt mit der Wand an einer bestimmten Stelle der Inspektionsvorrichtung zu detektieren kann gemäß einer erfindungsgemäßen Weiterbildung ein Hallsensor als Magnetfeldsensor Verwendung finden. Durch Berühren der Wand wird insbesondere im Bereich der dichtesten Annäherung der Magneten an die Wand das Magnetfeld stark verändert, was mit dem Hallsensor, der an der Position mit der Vorrichtung vorbeigerollt wird, erkannt werden kann. Aus der hierbei aufgezeichneten Signalkurve kann neben dem genauen Punkt der Berührung auch eine entsprechende Berührungszeit erfasst werden. Die Drehung der Vorrichtung kann auf Basis der erfassten Ereignisse berechnet werden, wobei in einer entsprechenden Elektronik entweder der Steuereinheit oder des Sensors selbst die Zeit erfasst wird und entsprechend dann die Drehung der Vorrichtung auf Basis der erfassten Signale in der Inspektionsvorrichtung selbst oder später berechnet werden kann.

Alternativ oder ergänzend zu einem Hallsensor kann bei einer weiteren Ausbildung der Erfindung mindestens eine Spule in einer erfinderischen Vorrichtung integriert sein. Ein in der Spule detektiertes Magnetfeld kann dann ebenfalls zur Berechnung der Drehung der Vorrichtung verwendet werden.

Schallsensoren in Form beispielsweise eines Hydrophons können zur Informationsübermittlung an die Vorrichtung verwendet werden bzw. zur Aussendung von Schall in die Rohrleitungswand zwecks insbesondere Ortung der Vorrichtung oder anderweitiger Informationsübermittlung verwendet werden. Diese Informationen können dann auch von außerhalb der Rohrleitungswand oder mit in die Rohrleitungswand integrierten Schallsensoren bzw. Mikrophonen empfangen werden. Schallsensoren können ebenfalls Ultraschallsensoren sein, mit denen Integritätsuntersuchungen durchgeführt werden. Insbesondere kann die erfindungsgemäße Vorrichtung gemäß einer weiteren Ausführung auch EMAT-Sensoren aufweisen, d.h. elektromagnetische Transducer, die ohne flüssige Kopplungsmedien über elektromagnetische Wechselwirkungen in der Rohrleitungswand Ultraschall erzeugen können. Die als Stabilisierungsmittel eingebauten Magnete können hierbei zur Ausbildung eines für die Erzeugung des Ultraschalls notwendigen Magnetfelds Verwendung finden. Vorzugsweise sind die EMAT-Sensoren dann in Richtung der Drehachse der Inspektionsvorrichtung in verschiedene Richtungen versetzt zu den Magneten angeordnet.

Druck- und Temperatursensoren können zur Korrektur der gewonnenen Daten verwendet werden.

Erfindungsgemäß kann die Inspektionsvorrichtung mindestens eine Kamera aufweisen. Die Position der Kamera kann hierbei vorteilhafterweise mit einem Beschleunigungssensor der Inspektionsvorrichtung bestimmt werden, wodurch Bilder an vordefinierten Positionen der Kamera aufgenommen werden können. Alternativ oder ergänzend kann die Kamera Bildsequenzen, d.h. Videos, aufnehmen. Vorzugsweise sind mehrere Kameras gleichmäßig um den Umfang herum verteilt. Alternativ oder ergänzend weist die Inspektionsvorrichtung auch ein oder mehrere Kameras mit Hauptblickrichtung entlang der Drehachse auf.

So kann beispielsweise und insbesondere automatisiert eine kontinuierliche Ansicht der Innenseite des Rohres erstellt werden. Durch die Kombination von Bildern können Videoaufnahmen für eine bestimmte Kameraposition erstellt werden, als ob die Kamera nicht mit der Vorrichtung gedreht würde. Bei einer Variante, bei der die Aufnahmezeit an die Position der Vorrichtung gebunden ist, ergibt sich somit eine jedenfalls gleichmäßige Abdeckungen der Rohrleitungswand mit den Bildern unabhängig von der Laufgeschwindigkeit der Vorrichtung. Durch Integration der gewonnenen Daten, beispielsweise der Distanz in einer Rohrleitung, kann automatisiert oder durch ein externes Signal ausgelöst die Aufnahme von Bildern oder Videos an einer bestimmten Position veranlasst werden. So kann beispielsweise die Position der Vorrichtung mit dem Start einer Messreihe gekoppelt werden, bei der beispielsweise ein oder mehrere Ultraschallsensoren eine Messung starten. Nach dem Lauf kann der Datensatz, der in der Vorrichtung gespeichert wird, dann für eine bestimmte Sensorposition ausgewertet werden. Alternativ kann ein Datensatz auch bei entsprechenden Übertragungsmitteln über die Rohrleitung oder kabelgebunden bei einzelnen Varianten bereits während des Laufs eine Auswertung stattfinden. Vorzugsweise sind einer jeweiligen Kamera Beleuchtungsmittel, insbesondere in Form von LEDs zugeordnet.

Vorteilhafterweise umfasst die erfindungsgemäße Inspektionsvorrichtung einen Generator mit einer Generatorspule, die mit mehreren Windungen so gewickelt ist, dass sich der Magnetfluss durch die einzelnen Windungen bei der Drehung der Vorrichtung ständig ändert. Hierdurch wird eine elektrische Spannung induziert, die zum Laden der ggf. vorhandenen Akkus sowie die zur Stromversorgung der Elektronik verwendet wird.

Insbesondere ist die Inspektionsvorrichtung zur Aufnahme eines Bildes und/oder einer Sequenz von Bildern in Abhängigkeit von einer durch einen Sensor bestimmten Position ausgebildet.

Insbesondere ist die Inspektionsvorrichtung mit zumindest einem sich insbesondere von der Drehachse wegerstreckenden Vortriebselement versehen. Hierbei kann es sich beispielsweise um bezogen auf die Drehachse links und rechts der Stabilisierungsmittel angeordnete Lamellen oder Stege handeln, wobei die Konstruktion insbesondere so ausgelegt ist, dass bei einer Drehung der Vorrichtung um 180° um die Drehachse die gleiche Tragkraft erreicht wird. Dadurch ist gewährleistet, dass die Vorrichtung bei einer unerwarteten Drehung um 180° uneingeschränkt weiterlaufen kann. Insbesondere sind die Lamellen so ausgebildet, dass ein stromabwärts gerichtetes Drehmoment um die Drehachse erzeugt wird. Dies kann beispielsweise durch entsprechend gewendelte Lamellen erfolgen.

Um beispielsweise auf der Null-Uhr-Position genauso wie auf der Sechs-Uhr-Position Inspektionen durchführen zu können, ist eine erfindungsgemäße Vorrichtung in einem weiteren Ausführungsbeispiel dergestalt ausgebildet, dass der Sensorträger eine durch befüllbare Hohlräume der Inspektionsvorrichtung und/oder in den Sensorträger integrierbare Gewichtselemente und/oder eine auswechselbare Tragstruktur veränderbarer mittlere Dichte aufweist. Hierdurch kann für eine Rohrleitung mit einem flüssigen Medium eine Null- oder Sechs-Uhr-Position der Inspektionsvorrichtung eingestellt werden.

Um einen ungewünschten Übergang der Inspektionsvorrichtung in Abzweige von der Rohrleitung zu vermeiden kann diese durch Seitenstabilisierer, beispielsweise in Form von abstehenden Armen oder Rudern verbreitert werden.

Mehrere der erfindungsgemäßen Inspektionsvorrichtungen können zwecks Lösung der eingangs gestellten Aufgabe auch zu einer Inspektionseinheit gekoppelt werden. Hierzu verbindet eine Zentraleinheit, beispielsweise in Form eines Rahmens, mehrere Inspektionsvorrichtungen, wie sie vorstehend oder nachfolgend beschrieben sind.

Eine solche Zentraleinheit kann weitere funktionale Einheiten aufweisen, beispielsweise einen Energiespeicher und/oder einen Datenspeicher aufweisen.

Integriert in einen klassischen Molch kann die Vorrichtung auch als Odometer und/oder als Messeinheit eines herkömmlichen Molches verwendet werden.

Weitere Vorteile und Einzelheiten der Erfindung sind der nachfolgenden Figurenbeschreibung zu entnehmen. Schematisch dargestellt zeigt:
- Fig. 1: eine erfindungsgemäße Inspektionsvorrichtung in einer perspektivischen Ansicht,
- Fig. 2: den Gegenstand nach Fig. 1 in einer Schnittdarstellung,
- Fig. 3: eine Teilansicht eines Teils des Gegenstands nach Fig. 1,
- Fig. 4: eine erfindungsgemäße Inspektionseinheit,
- Fig. 5: eine Ansicht eines Umfangs einer erfindungsgemäßen Vorrichtung,
- Fig. 6: eine weitere erfindungsgemäße Vorrichtung,
- Fig. 7: den Gegenstand nach Fig. 6 in einer Schnittdarstellung, dargestellt in einer Rohrleitung.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen eines unabhängigen Anspruchs. Sofern sinnvoll, sind funktional gleichwirkende Teile mit identischen Bezugsziffern versehen.

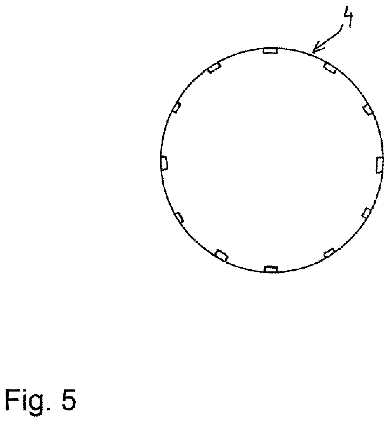

Eine erfindungsgemäße Inspektionsvorrichtung zur Untersuchung von Rohrleitungen, in der ein Fluid, insbesondere Wasser und/oder Öl transportiert wird, weist einen im Betriebsfall durch die Rohrleitung rollbaren Sensorträger 1 auf, der in einem quer zu einer Drehachse 2 verlaufenden Schnitt (vgl. Fig. 5) mit einem kreisartigen Umfang 4 versehen ist. Fig. 5 zeigt nur den äußeren Umfang in einer Schnittdarstellung ohne weitere funktionale Teile der Inspektionsvorrichtung.

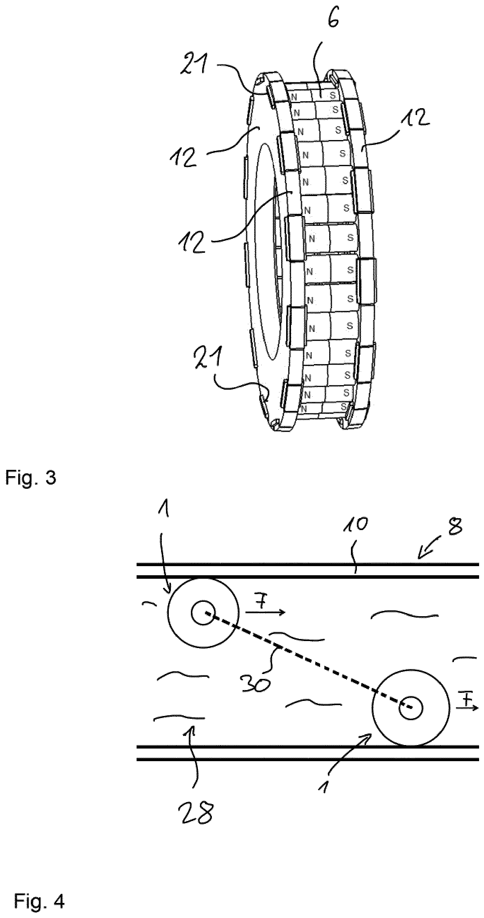

Weiterhin weist die Inspektionsvorrichtung bzw. der Sensorträger 1 mehrere entlang des Umfangs 4 angeordnete Stabilisierungsmittel 6 auf, die vorliegend als nebeneinander angeordnete Dauermagneten mit Nordpol N und Südpol S ausgebildet sind. Im Betriebsfall erfolgt eine Bewegung der Inspektionsvorrichtung in eine Richtung F (Fig. 3), die der Rohrleitungslängsrichtung der Rohrleitung 8 entspricht. Hierbei rollt die jeweilige Inspektionsvorrichtung an der Innenseite der Rohrleitung 8 entlang.

Durch die von der Drehachse 2 radial beabstandeten Magnete wechselwirkt im Betriebsfall das Magnetfeld mit der Rohrleitungswand 10, wobei durch das Abrollen auf der inneren Oberfläche der Rohrleitungswand 10 und die hiermit einhergehenden Magnetfeldänderungen Wirbelströme erzeugt werden, die einer Erhöhung der Laufgeschwindigkeit der Inspektionsvorrichtung in Richtung F entgegenwirken. Das Abrollen der Inspektionsvorrichtung in der Rohrleitung 8 erfolgt somit gleichmäßiger.

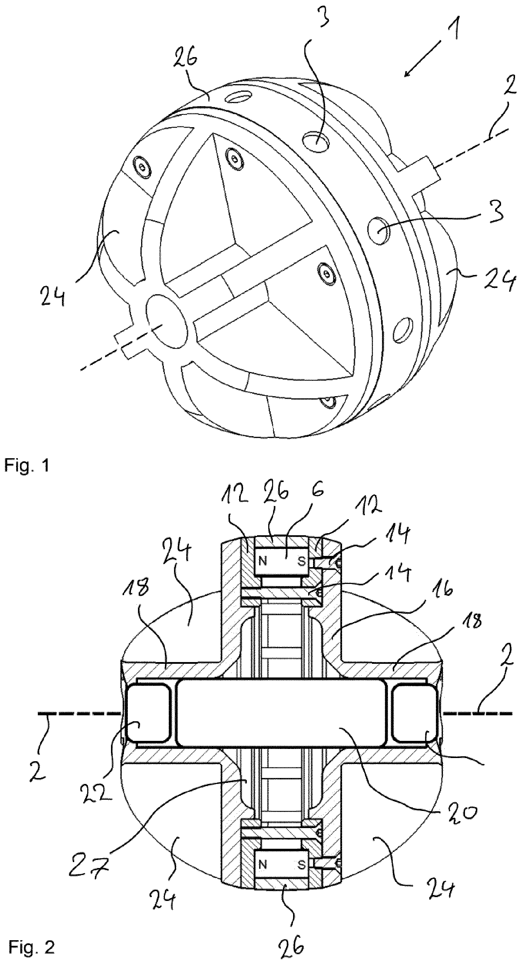

Vorliegend sind die Permanentmagnete mit ihrer Nord-/Südausrichtung parallel zur Drehachse 2 ausgerichtet. Wobei die entlang des Umfangs 4 dicht aneinander angeordneten Magnete auf beiden Seiten von einer vorliegend kreisringförmigen Einfassung 12 begrenzt sind (Fig. 2). Diese beiden Einfassungen 12 können auch den Umfang mit ausbilden und insbesondere Kontaktstellen zur Rohrleitungswand ausbilden. Insbesondere richten sie jedoch das Magnetfeld in Richtung der Rohrleitungswand 10, so dass eine stabile Wechselwirkung während des Betriebs entsteht.

Vorliegend sind die Einfassungen 12 die auch in einer weiteren Ausbildung der Erfindung einstückig und u-förmig die Stabmagneten begrenzen können, über Befestigungsmittel 14 miteinander bzw. mit einer Tragstruktur 16 der Inspektionsvorrichtung verbunden.

Die Tragstruktur 16 ist im Wesentlichen mit zwei spiegelbildlich ausgeformten Hälften ausgebildet, die eine tellerartige Basis haben, auf der hohlzylinderförmige Abschnitte 18 angeordnet sind. In diesen teilweise sowie in einem zentralen Hohlraum der Inspektionsvorrichtung ist eine Elektronikeinheit 20 umfassend eine Steuereinheit und/oder ein Datenspeicher und/oder ein Energiespeicher und/oder ein Beschleunigungssensor und/oder eine Kommunikationseinheit angeordnet. Die Elektronikeinheit kann zu den offenen Enden der hohlzylinderförmigen Ansatzstücke abgedichtet sein. Vorliegend sind in diesem Ende Sensoren 22 in Form von Hydrophonen angeordnet.

Die Tragstruktur des Sensorträgers 1 umfasst weiterhin einstückig mit dem Hohlzylinder 18 und der tellerförmigen Basis ausgebildete Vortriebselemente 24 in Form von Lamellen, die einen Strömungswiderstand erzeugen und durch die ein verbesserter Vortrieb der Inspektionsvorrichtung in der Rohrleitung gewährleisten.

Eine Umhüllende der Vorrichtung weist sich eine ellipsoidartige Form auf, wobei die vorbezeichneten Enden mit Hydrophonen und/oder der Bereich, der zur Anlage an der Rohrleitungswand ausgebildet ist, bei diesem wie auch bei anderen Ausführungsbeispielen der Erfindung zusätzlich abgeflacht sein kann.

Insbesondere ist die Tragstruktur 16 aus einem Kunststoff, vorzugsweise aus einem Polyurethan, hergestellt und weist dämpfende Eigenschaften auf, um durch etwaige Erschütterungen erzeugte Störungen der Messungen möglichst gering zu halten.

Um die Magnete herum und den Umfang mit ausbildend ist ein ringförmiges, aus einem Kunststoff hergestelltes und elastisches Dämpfungselement 26 angeordnet, das an seiner äußeren Oberfläche einen größeren Abstand zur Drehachse aufweist als die Abrollelemente darstellenden Einfassungen 12. Während des Betriebs wird das Dämpfungselement 26 komprimiert, wodurch es gegen die magnetischen Anziehungskräfte und somit dämpfend wirkt. Darüber hinaus sind die Magnete vor mechanischer Beschädigung geschützt und aufgrund der erhöhten Oberflächenreibung rollt die Vorrichtung besser und gleichmäßiger ab, da der Schlupf auf der Rohrleitungswand reduziert wird.

In der Detailansicht der Fig. 3 sind zusätzlich zu den Magneten bzw. Stabilisierungselementen 6 sowie den die Einfassungen 12 Spulen 21 eines Generators gezeigt, in denen beim Rollen der Vorrichtung eine elektrische Spannung induziert wird, welche zur Energiegewinnung verwendet wird. Hierdurch kann der Energiespeicher geladen bzw. die Stromversorgung der Vorrichtung verbessert werden.

Im Inneren der Vorrichtung vorhandene Hohlräume 27 können mittels eines nicht weiter dargestellten Pumpensystems befüllt werden, um den Auftrieb der Inspektionsvorrichtung in einem Medium 28 (vgl. Fig. 4) dergestalt anzupassen, dass eine jeweilige Inspektionsvorrichtung entweder wie in Fig. 4 gezeigt an der oberen Seite der Rohrleitungswand 10 oder an der unteren Seite der Rohleitungswand 10 abrollt.

Beide in der Fig. 4 dargestellte Inspektionsvorrichtungen können durch eine gestrichelt dargestellte, optionale Zentraleinheit 30 beispielsweise in Form eines Rahmens miteinander verbunden sein.

Anstelle einer Sensoreinheit 3 kann auch eine für die Zwecke dieser Anmeldung nicht als Sensor bezeichnete Kamera, insbesondere eine 2- oder 3D Kamera in der Inspektionsvorrichtung angeordnet sein, wobei auf Basis der Daten eines Beschleunigungssensors eine Bilderfassung immer in einer bestimmten Relativposition der Kamera zur Rohrleitungswand erzeugt wird.

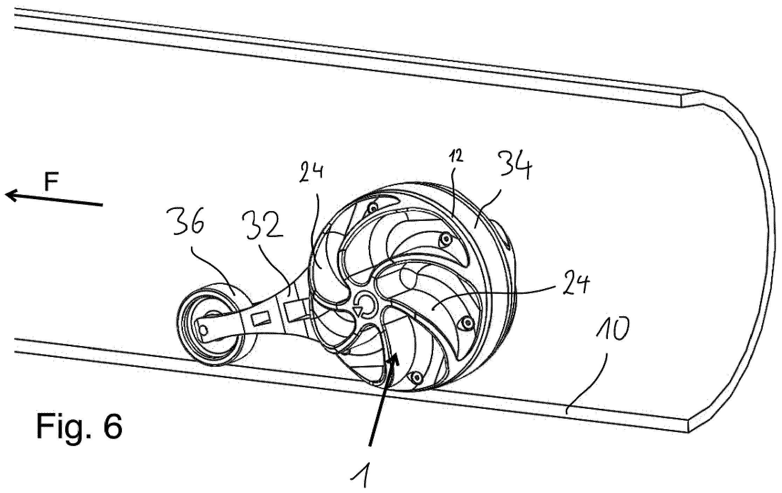

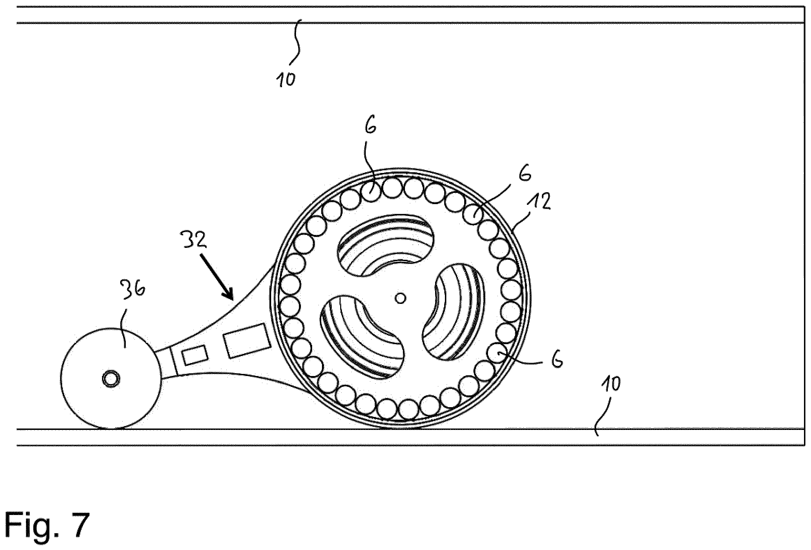

Ein weiteres erfindungsgemäßes Ausführungsbeispiel ist gemäß Fig. 6 und 7 mit einem zur Abstützung der Inspektionsvorrichtung an der Rohrleitungswand vorgesehenen Abstützelement 32 versehen, in dem der Sensorträger 1 drehbar gehalten ist. Einenends wird der Sensorträger 1 von einem in dem vorstehenden Ausführungsbeispiel kreissegmentförmigen Teil 34 des Abstützelements 32 gehalten, anderenends ist zur Abstützung an der Rohrleitungswand ein Rollrad 36 vorgesehen. Der Teil 34 dient der Lagerung des Sensorträgers 1 mittels Gleit- oder Rolllager. Die Drehachsen des Rollrads 36 und des Sensorträgers 1 verlaufen parallel und quer zur Rohrleitungslängs- und Fahrtrichtung. Das Rollrad 36 ist das führende Element der Inspektionsvorrichtung, deren Sensorträger 1 spiralförmig von einer Drehachse wegführende Vortriebselemente 24 aufweist. Auch dieser Sensorträger 1 ist mit einem kreisförmigen Umfang 4 versehen, der durch Einfassungen 12 ausgebildet wird. Magnete sind entlang des Umfangs als Stabilisierungsmittel 6 angeordnet. Das führende Rollrad 36 kann je nach Ausführungsbeispiel ebenfalls entlang des Umfangs mit Magneten versehen sein.

## Patentansprüche

1. Inspektionsvorrichtung zur Untersuchung von Rohrleitungen (8) umfassend einen im Betriebsfall durch die Rohrleitung (8) rollbaren Sensorträger (1), der in einem quer zu einer Drehachse (2) verlaufenden Schnitt mit einem zumindest im Wesentlichen kreisartigen Umfang (4) versehen ist und der zumindest eine Sensoreinheit (3) aufweist, wobei der Sensorträger (1) mehrere entlang des Umfangs (4) angeordnete Stabilisierungsmittel (6) umfasst, und wobei sich die Inspektionsvorrichtung im Betriebsfall in eine Richtung zumindest im Wesentlichen quer zur Drehachse bewegt und auf dem Umfang abrollt, **dadurch gekennzeichnet, dass** als Stabilisierungsmittel (6) mehrere von der Drehachse (2) radial beabstandete Magnete vorgesehen sind, wobei ein Magnetfeld der Magnete im Betriebsfall für einen stabileren Lauf mit einer Rohrleitungswand (10) wechselwirkt.

2. Inspektionsvorrichtung nach Anspruch 1, **dadurch gekennzeichnet, dass** als Stabilisierungsmittel (6) zusätzlich
ein oder mehrere von der Drehachse (2) radial beabstandete Gewichte vorgesehen sind.

3. Inspektionsvorrichtung nach Anspruch 2, **dadurch gekennzeichnet, dass** die Nord-Süd-Ausrichtung der als Permanentmagnete ausgebildeten Magnete parallel zur Drehachse (2) verläuft.

4. Inspektionsvorrichtung nach Anspruch 2, **dadurch gekennzeichnet, dass** die Nord-Süd-Ausrichtung der als Permanentmagnete ausgebildeten Magnete radial zur Drehachse (2) verläuft.

5. Inspektionsvorrichtung nach einem der vorherigen Ansprüche 3 oder 4, **dadurch gekennzeichnet, dass** die Magnete entlang des Umfangs (4) dicht nebeneinander angeordnet sind.

6. Inspektionsvorrichtung nach einem der vorherigen Ansprüche, **dadurch gekennzeichnet, dass** der oder die Magnete zumindest auf einer Seite von einer ein magnetisierbares Material aufweisenden und insbesondere in Richtung der Drehachse (2) betrachtet vorzugsweise kreisringförmigen und insbesondere magnetisierbaren Einfassung (12) begrenzt ist, die insbesondere den Umfang (4) mit ausbildet.

7. Inspektionsvorrichtung nach einem der vorherigen Ansprüche, **dadurch gekennzeichnet, dass** der Sensorträger (1) eine kugel- oder ellipsoidartige Umhüllende aufweist.

8. Inspektionsvorrichtung nach Anspruch 7, **dadurch gekennzeichnet, dass** bei der ellipsoidartigen Umhüllenden die Längen zweier insbesondere gleich langer Halbachsen größer sind als die der in der Drehachse liegenden dritten Halbachse.

9. Inspektionsvorrichtung nach einem der vorherigen Ansprüche 1 bis 6, **dadurch gekennzeichnet, dass** der Sensorträger (1) drehbar in einem zur Abstützung der Inspektionsvorrichtung an der Rohrleitungswand (10) vorgesehenen Abstützelement (32) gehalten ist, insbesondere welches einenends den Sensorträger (1) umfasst und anderenends zur Abstützung an der Rohrleitungswand (10) ausgebildet ist.

10. Inspektionsvorrichtung nach einem der vorherigen Ansprüche, **dadurch gekennzeichnet, dass** der Umfang (4) durch zumindest ein zumindest teilweise aus Kunststoff hergestelltes, vorzugsweise ringförmiges und/oder elastisches Dämpfungselement (26) und/oder durch zumindest ein Abrollelement zumindest mit ausgebildet wird.

11. Inspektionsvorrichtung nach Anspruch 10, **dadurch gekennzeichnet, dass** eine Tragstruktur (16) des Sensorträgers (1) aus dem oder einem weiteren Kunststoff zumindest mit ausgebildet ist.

12. Inspektionsvorrichtung nach einem der vorherigen Ansprüche, **dadurch gekennzeichnet, dass** die Sensoreinheit (3) der Inspektionsvorrichtung wenigstens einen Sensor aus einer Gruppe umfassend Gyroskope, Beschleunigungssensoren, Magnetfeldsensoren, Schallsensoren, EMAT-Sensoren, Drucksensoren und Temperatursensoren aufweist.

13. Inspektionsvorrichtung nach einem der vorherigen Ansprüche, **dadurch gekennzeichnet, dass** die Inspektionsvorrichtung eine Kamera und/oder einen Generator mit einer Generatorspule aufweist.

14. Inspektionsvorrichtung nach Anspruch 12 und Anspruch 13, **dadurch gekennzeichnet, dass** die Inspektionsvorrichtung zur Aufnahme eines Bildes und/oder einer Sequenz von Bildern in Abhängigkeit von einer durch einen Sensor mit bestimmten Position ausgebildet ist.

15. Inspektionsvorrichtung nach einem der vorherigen Ansprüche, **dadurch gekennzeichnet, dass** die Inspektionsvorrichtung wenigstens ein sich insbesondere von der Drehachse (2) wegerstreckendes Vortriebselement (24) aufweist.

16. Inspektionsvorrichtung nach einem der vorherigen Ansprüche, **dadurch gekennzeichnet, dass** der Sensorträger (1) eine durch befüllbare Hohlräume (27) der Inspektionsvorrichtung und/oder in den Sensorträger (1) integrierbare Gewichtselemente und/oder eine auswechselbare Tragstruktur (16) veränderbare mittlere Dichte aufweist.

17. Inspektionseinheit nach einem der vorherigen Ansprüche, **gekennzeichnet durch** eine Zentraleinheit (30), die mit einer oder mehreren Inspektionsvorrichtungen nach einem der vorherigen Ansprüche verbunden ist.

## Claims

1. Inspection device for examining pipelines (8), comprising a sensor carrier (1) which in operation is rollable through the pipeline (8) and which is provided with an at least essentially circular circumference (4) in a cross section that runs transverse to an axis of rotation (2) and which has at least one sensor unit (3), wherein the sensor carrier (1) comprises a multitude of stabilizing means (6) disposed along the circumference (4), and wherein, in operation, the inspection device moves in a direction at least essentially transverse to the axis of rotation and rolls against the circumference, **characterized in that** the stabilizing means (6) provided are a multitude of magnets spaced apart radially from the axis of rotation (2), where a magnetic field of the magnets interacts in operation with a pipeline wall (10) for more stable running.

2. Inspection device according to Claim 1, **characterized in that** stabilizing means (6) additionally provided are one or more weights spaced apart radially from the axis of rotation (2).

3. Inspection device according to Claim 2, **characterized in that** the north-south alignment of the magnets in the form of permanent magnets runs parallel to the axis of rotation (2).

4. Inspection device according to Claim 2, **characterized in that** the north-south alignment of the magnets in the form of permanent magnets runs radially with respect to the axis of rotation (2).

5. Inspection device according to either of the preceding Claims 3 and 4, **characterized in that** the magnets are arranged close to one another along the circumference (4).

6. Inspection device according to any of the preceding claims, **characterized in that** the magnet(s) is/are bounded at least on one side by a surround (12) which includes a magnetizable material and is preferably circular, especially viewed in the direction of the axis of rotation (2), and is especially magnetizable, and which especially forms part of the circumference (4).

7. Inspection device according to any of the preceding claims, **characterized in that** the sensor carrier (1) has a spheroidal or ellipsoidal shell.

8. Inspection device according to Claim 7, **characterized in that**, in the ellipsoidal shell, the lengths of two semi-axes, which are especially of equal length, are greater than that of the third semi-axis lying in the axis of rotation.

9. Inspection device according to any of the preceding Claims 1 to 6, **characterized in that** the sensor carrier (1) is held rotatably in a supporting element (32) provided for supporting the inspection device against the pipeline wall (10), especially one that comprises the sensor carrier (1) at one end and is designed for supporting against the pipeline wall (10) at the other end.

10. Inspection device according to any of the preceding claims, **characterized in that** the circumference (4) is formed at least partly by at least one preferably ringshaped and/or elastic damping element (26) produced at least partly from plastic and/or by at least one rolling element.

11. Inspection device according to Claim 10, **characterized in that** a load-bearing structure (16) for the sensor carrier (1) is formed at least partly from the plastic or a further plastic.

12. Inspection device according to any of the preceding claims, **characterized in that** the sensor unit (3) of the inspection device includes at least one sensor from the group comprising gyroscopes, acceleration sensors, magnetic field sensors, sound sensors, EMAT sensors, pressure sensors and temperature sensors.

13. Inspection device according to any of the preceding claims, **characterized in that** the inspection device includes a camera and/or a generator having a generator coil.

14. Inspection device according to Claim 12 and Claim 13, **characterized in that** the inspection device is designed to record an image and/or a sequence of images depending on a position partly determined by a sensor.

15. Inspection device according to any of the preceding claims, **characterized in that** the inspection device includes at least one propulsion element (24) that especially extends away from the axis of rotation (2).

16. Inspection device according to any of the preceding claims, **characterized in that** the sensor carrier (1) has an average density variable by means of fillable cavities (27) in the inspection device and/or weight elements integratable into the sensor carrier (1) and/or an exchangeable load-bearing structure (16).

17. Inspection device according to any of the preceding claims, **characterized by** a central unit (30) connected to one or more inspection devices according to any of the preceding claims.

## Revendications

1. Dispositif d'inspection destiné à l'examen de canalisations (8), comprenant un support de capteur (1) qui est apte à rouler à travers la canalisation (8) pendant le fonctionnement et qui est pourvu d'une circonférence (4) au moins sensiblement circulaire dans une vue en coupe transversale par rapport à un axe de rotation (2) et qui comporte au moins une unité de détection (3), le support de capteur (1) comprenant plusieurs moyens de stabilisation (6) disposés le long de la circonférence (4) et, pendant le fonctionnement, le dispositif d'inspection se déplaçant dans une direction au moins sensiblement transversale à l'axe de rotation et roulant sur la circonférence, **caractérisé en ce que** plusieurs aimants espacés radialement de l'axe de rotation (2) sont prévus comme moyens de stabilisation (6), le champ magnétique des aimants interagissant avec une paroi de canalisation (10) pendant le fonctionnement en vue d'une course plus stable.

2. Dispositif d'inspection selon la revendication 1, **caractérisé en ce qu'**un ou plusieurs poids espacés radialement de l'axe de rotation (2) sont en plus prévus comme des moyens de stabilisation (6).

3. Dispositif d'inspection selon la revendication 2, **caractérisé en ce que** l'orientation nord-sud des aimants conçus comme aimants permanents est parallèle à l'axe de rotation (2) .

4. Dispositif d'inspection selon la revendication 2, **caractérisé en ce que** l'orientation nord-sud des aimants conçus comme aimants permanents s'étend radialement à l'axe de rotation (2).

5. Dispositif d'inspection selon l'une des revendications précédentes 3 ou 4, **caractérisé en ce que** les aimants sont disposés les uns à côté des autres le long de la circonférence (4).

6. Dispositif d'inspection selon l'une des revendications précédentes, **caractérisé en ce que** le ou les aimants sont limités au moins sur un côté par une bordure (12), notamment magnétisable, qui comporte un matériau magnétisable, qui est de préférence annulaire dans une vue en direction de l'axe de rotation (2) et qui forme notamment la circonférence (4).

7. Dispositif d'inspection selon l'une des revendications précédentes, **caractérisé en ce que** le support de capteur (1) comporte une enveloppe de type sphérique ou ellipsoïde.

8. Dispositif d'inspection selon la revendication 7, **caractérisé en ce que** dans l'enveloppe de type ellipsoïde les longueurs de deux demi-axes, notamment égales, sont supérieures à celles du troisième demi-axe situé dans l'axe de rotation.

9. Dispositif d'inspection selon l'une des revendications précédentes 1 à 6, **caractérisé en ce que** le support de capteur (1) est maintenu de manière à pouvoir tourner dans un élément d'appui (32) prévu pour venir en appui sur la paroi de canalisation (10) afin de supporter le dispositif d'inspection, lequel élément d'appui comprend notamment le support de capteur (1) à une extrémité et est conçu pour venir en appui sur la paroi de canalisation (10) à l'autre extrémité.

10. Dispositif d'inspection selon l'une des revendications précédentes, **caractérisé en ce que** la circonférence (4) est au moins formée par au moins un élément d'amortissement (26) de préférence annulaire et/ou élastique, réalisé au moins partiellement à partir d'une matière synthétique, et/ou par au moins un élément roulant.

11. Dispositif d'inspection selon la revendication 10, **caractérisé en ce qu'**une structure porteuse (16) du support de capteur (1) est au moins formée à partir de la matière synthétique ou d'une autre.

12. Dispositif d'inspection selon l'une des revendications précédentes, **caractérisé en ce que** l'unité de détection (3) du dispositif d'inspection comporte au moins un capteur d'un groupe comprenant des gyroscopes, des capteurs d'accélération, des capteurs de champ magnétique, des capteurs acoustiques, des capteurs EMAT, des capteurs de pression et des capteurs de température.

13. Dispositif d'inspection selon l'une des revendications précédentes, **caractérisé en ce que** le dispositif d'inspection comporte une caméra et/ou un générateur pourvu d'une bobine génératrice.

14. Dispositif d'inspection selon la revendication 12 et la revendication 13, **caractérisé en ce que** le dispositif d'inspection est conçu pour capturer une image et/ou une séquence d'images en fonction d'une position déterminée par un capteur.

15. Dispositif d'inspection selon l'une des revendications précédentes, **caractérisé en ce que** le dispositif d'inspection comporte au moins un élément d'avancement (24) qui s'étend notamment depuis l'axe de rotation (2).

16. Dispositif d'inspection selon l'une des revendications précédentes, **caractérisé en ce que** le support de capteur (1) a une densité moyenne modifiable par le biais de cavités (27) pouvant être remplies du dispositif d'inspection et/ou d'éléments pondéreux pouvant être intégrés dans le support de capteur (1) et/ou une structure porteuse remplaçable (16).

17. Unité d'inspection selon l'une des revendications précédentes, **caractérisée par** une unité centrale (30) qui est reliée à un ou plusieurs dispositifs d'inspection selon l'une des revendications précédentes.
